# FASCICULE DE BREVET EUROPEEN

(11) **EP 0 727 866 B1**
(45) Date de publication et mention de la délivrance du brevet: **24.11.1999**
(21) Numéro de dépôt: 96410012.7
(22) Date de dépôt: 08.02.1996
(51) Int. Cl.: H02K 11/02, H02P 7/29, H02P 7/295

(54) **Dispositif de commande d'un moteur électrique à vitesse variable**
Vorrichtung zur Steuerung eines Elektromotors mit veränderlicher Drehzahl
Variable speed electric motor control device

(30) Priorité: 17.02.1995 FR 9502065
(43) Date de publication de la demande: 21.08.1996
(73) Titulaire: STMicroelectronics S.A., 94250 Gentilly (FR)
(72) Inventeur: Charreton, Jean-Marie, F-13320 Bouc-Bel-Air (FR)
(74) Mandataire: de Beaumont, Michel

(56) Documents cités:
- EP-A- 0 148 411
- EP-A- 0 582 516
- US-A- 4 152 758

## Description

La présente invention concerne un dispositif de commande d'un moteur électrique à vitesse variable. L'invention s'applique plus particulièrement au filtrage de perturbations radiofréquences provenant d'un moteur électrique commandé par un hacheur.

Un tel dispositif de commande d'un moteur à vitesse variable se retrouve, par exemple, dans des appareils ménagers, comme un aspirateur, un lave-linge, une perceuse, un robot ménager, etc. pour des puissances de 100 à 1500 Watts.

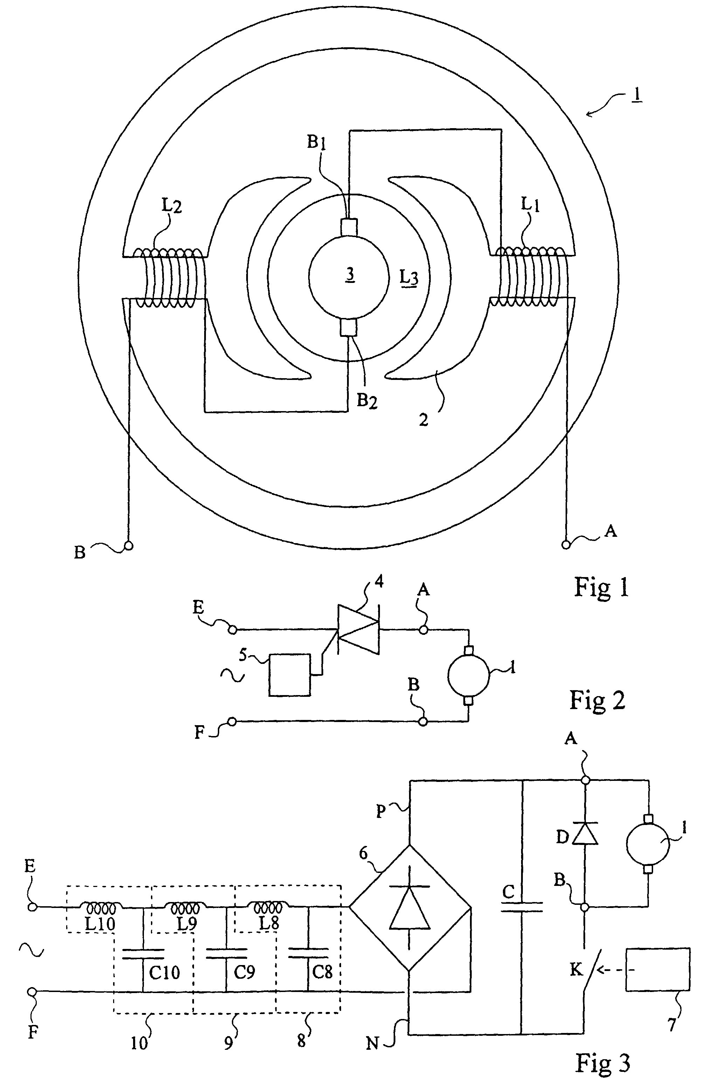

La figure 1 représente schématiquement un moteur électrique classique. Un tel moteur 1 est constitué de deux enroulements primaires (ou inducteurs) L1 et L2 associés à un stator 2 de canalisation d'un champ magnétique vers un rotor 3 pourvu d'un troisième enroulement (ou induit) L3. Deux bornes A et B d'alimentation du moteur 1 correspondent, respectivement, à une extrémité de chaque enroulement L1 ou L2. Une autre extrémité de chaque enroulement L1 et L2 est raccordée à un balai, respectivement B1 ou B2, de contact avec le troisième enroulement L3.

Il est usuel de commander un tel moteur par l'intermédiaire d'un circuit électronique de commutation périodique de l'alimentation du moteur de façon à fixer sa puissance d'alimentation et ainsi sa vitesse.

La figure 2 représente, sous la forme d'un schéma électrique, un premier exemple de dispositif de commande d'un moteur à vitesse variable tel que représenté à la figure 1.

Le dispositif de commande comporte un triac 4 dont la gâchette est reliée à un circuit 5 destiné à fixer les périodes de conduction du triac 4 en fonction de la vitesse souhaitée pour le moteur 1. Le triac 4 est interposé entre une première borne A du moteur 1 et une première borne E du réseau électrique alternatif, une deuxième borne B du moteur 1 étant directement reliée à une deuxième borne F du réseau électrique.

Un inconvénient d'un tel dispositif de commande est que le courant qui circule dans les enroulements du moteur 1 présente de fortes ondulations correspondant aux périodes de conduction du triac 4. Ces fortes variations de courant nuisent à la durée de vie du moteur.

Un autre inconvénient est que les commutations du triac 4 engendrent des perturbations harmoniques de la fréquence d'alimentation (par exemple 50 Hz). Ces perturbations engendrent du bruit acoustique aux fréquences des harmoniques de la fréquence d'alimentation. Les limites acceptables d'intensité de ces perturbations harmoniques sont imposées par diverses normes, par exemple la norme CEI 1000 (EN 60555), qui fixent, pour chaque harmonique de la fréquence d'alimentation fournie par le réseau, l'intensité maximale. Les perturbations harmoniques engendrées par le triac 4 dépassent les limites fixées par cette norme, notamment pour des puissances élevées du moteur ou pour des réglages intermédiaires de la puissance, donc de la vitesse du moteur. C'est précisément le cas des moteurs de certains appareils ménagers, par exemple le moteur d'un lave-linge pendant les cycles d'essorage.

Pour réduire les perturbations harmoniques de la fréquence d'alimentation ainsi que les variations du courant dans le moteur, on utilise généralement un dispositif de commande à base d'un hacheur fonctionnant en modulation par impulsions de largeur variable (PWM) de la tension du réseau électrique redressée.

La figure 3 représente, sous la forme d'un schéma électrique, un deuxième exemple de dispositif de commande d'un moteur à vitesse variable, tel que représenté à la figure 1, utilisant un hacheur travaillant à fréquence fixe en mode PWM.

Un tel dispositif est connu, par exemple, du document EP-A-0582516.

La tension alternative, prélevée aux bornes E et F du réseau électrique, est redressée au moyen, par exemple, d'un pont de diodes 6. Une première borne A du moteur 1 est reliée directement à une première borne P de sortie du pont de diodes 6. Un interrupteur K est placé entre une seconde borne B du moteur 1 et une seconde borne N de sortie du pont de diodes 6. L'interrupteur K est commandé par un circuit 7 fournissant un train d'impulsions à une fréquence élevée (par exemple 20 kHz), la largeur des impulsions étant fonction de la vitesse souhaitée pour le moteur 1. L'interrupteur K module le signal sinusoïdal redressé par le pont 6 de façon à fixer la puissance d'alimentation du moteur 1 et ainsi sa vitesse. Une diode de roue libre D, placée entre les bornes A et B du moteur 1, réduit l'amplitude des ondulations du courant qui circule dans les enroulements du moteur 1. Généralement, un condensateur C de faible valeur (de l'ordre de 1 µF) est placé en parallèle avec le pont de diodes 6, côté moteur 1. Ce condensateur C est destiné à filtrer les pics de commutation de l'interrupteur K qui est, par exemple, constitué d'un transistor MOS de puissance.

Si un tel circuit de commande réduit considérablement les perturbations harmoniques de la fréquence d'alimentation du réseau et permet ainsi de respecter les contraintes de la norme CEI 1000, même à puissance élevée, la fréquence de fonctionnement du hacheur (par exemple de l'ordre de 20 kHz) engendre des perturbations radiofréquences liées aux commutations de l'interrupteur K. Il est alors nécessaire de filtrer ces perturbations pour qu'elles ne soient pas véhiculées par le réseau électrique.

Pour ce faire, on utilise classiquement des cellules de filtrage, par exemple trois cellules 8, 9 et 10, montées en série en amont du redresseur 6. Ces cellules sont des cellules LC constituées d'un condensateur, respectivement C8, C9 et C10, associé à une bobine, respectivement L8, L9 et L10. Le nombre de cellules LC dépend, généralement, du nombre d'harmoniques de la fréquence de commutation de l'interrupteur K que l'on souhaite filtrer.

Un inconvénient d'un tel dispositif de commande est que le nombre de cellules de filtrage que l'on est conduit à prévoir entraîne une réalisation particulièrement encombrante et onéreuse. En effet, les condensateurs et bobines des cellules LC doivent être dimensionnés pour filtrer la fréquence de 20 kHz de commutation et ses harmoniques tout en supportant la tension d'alimentation du réseau (par exemple 220 volts) et des intensités de plusieurs ampères en raison de la puissance du moteur. Les inductances des bobines sont, par exemple, comprises entre environ 10 et 60 mH et les capacités des condensateurs sont, par exemple, comprises entre environ 1 et 5 µF.

L'invention vise à pallier cet inconvénient en proposant un dispositif de commande d'un moteur électrique à vitesse variable au moyen d'un hacheur qui permette de réduire le nombre de cellules de filtrage des perturbations radiofréquences nécessaires.

Pour atteindre cet objet, la présente invention prévoit un dispositif de commande d'un moteur électrique à vitesse variable du type comportant un hacheur comprenant un interrupteur de modulation par impulsions de largeur variable d'une tension alternative redressée, au moins un enroulement dudit moteur constituant, avec un condensateur de filtrage des pics de commutation dudit interrupteur, une première cellule de filtrage de perturbations radiofréquences engendrées par les commutations de l'interrupteur.

Selon un mode de réalisation de la présente invention, ledit condensateur est placé entre une borne de sortie d'un redresseur de ladite tension alternative et un balai de contact entre une extrémité d'un enroulement de stator et un enroulement de rotor du moteur, l'interrupteur étant placé entre ladite borne du redresseur et une borne d'alimentation du moteur.

Selon un mode de réalisation de la présente invention, une diode de roue libre est placée entre ladite borne d'alimentation du moteur et ledit balai.

Selon un mode de réalisation de la présente invention, une des extrémités dudit premier enroulement du stator constitue une première borne d'alimentation du moteur reliée à une première borne de sortie du redresseur, tandis que l'autre extrémité dudit premier enroulement est reliée à un premier balai, une des extrémités d'un second enroulement du stator constituant une seconde borne d'alimentation du moteur reliée, par l'intermédiaire dudit interrupteur, à une seconde borne de sortie du redresseur, tandis que l'autre extrémité dudit second enroulement est reliée à un second balai.

Selon un mode de réalisation de la présente invention, ledit enroulement constitutif de ladite première cellule de filtrage est constitué d'un premier enroulement du stator dudit moteur, ledit condensateur étant placé entre ledit premier balai et ladite seconde borne du redresseur.

Selon un mode de réalisation de la présente invention, un premier enroulement du stator, associé en série avec l'enroulement du rotor dudit moteur constitue, avec ledit condensateur, ladite première cellule de filtrage, ledit condensateur étant placé entre ledit second balai et ladite seconde borne du redresseur.

Selon un mode de réalisation de la présente invention, ledit enroulement constitutif de ladite première cellule de filtrage est constitué d'un enroulement du rotor dudit moteur.

Selon un mode de réalisation de la présente invention, une des extrémités d'un premier enroulement du stator est reliée à un premier balai tandis qu'un second balai constitue une première borne d'alimentation du moteur reliée à une première borne de sortie du redresseur, l'autre extrémité dudit premier enroulement étant reliée à une des extrémités d'un second enroulement du stator dont l'autre extrémité constitue une seconde borne d'alimentation du moteur reliée, par l'intermédiaire dudit interrupteur, à une seconde borne de sortie du redresseur, ledit condensateur étant placé entre ledit premier balai et ladite seconde borne du redresseur.

Selon un mode de réalisation de la présente invention, la valeur du condensateur est choisie pour que la cellule de filtrage élimine au moins la première harmonique de la fréquence de modulation dudit hacheur.

Selon un mode de réalisation de la présente invention, le dispositif comporte, en outre, au moins une deuxième cellule de filtrage d'une harmonique de la fréquence de modulation dudit hacheur, en amont dudit redresseur.

Ces objets, caractéristiques et avantages de la présente invention seront exposés en détail dans la description suivante de modes de réalisation particuliers faite à titre non limitatif en relation avec les figures jointes parmi lesquelles :
les figures 1 à 3 qui ont été décrites précédemment sont destinées à exposer l'état de la technique et le problème posé ;
la figure 4 représente schématiquement un premier mode de réalisation d'un dispositif de commande selon l'invention où l'un des inducteurs du moteur participe à la formation d'une cellule de filtrage ;
la figure 5 représente schématiquement un deuxième mode de réalisation d'un dispositif de commande selon l'invention où l'induit du moteur participe à la formation d'une cellule de filtrage ; et
la figure 6 représente schématiquement un troisième mode de réalisation d'un dispositif de commande selon l'invention où l'un des inducteurs et l'induit du moteur participent à la formation d'une cellule de filtrage.

Pour des raisons de clarté, les mêmes éléments ont été désignés par les mêmes références aux différentes figures.

L'invention se base sur une analyse de la structure d'un moteur qui montre que les enroulements constituant les inducteurs et l'induit présentent une inductance du même ordre de grandeur que les bobines utilisées de manière classique dans les cellules de filtrage des perturbations radiofréquences. En effet, pour un moteur classique de 500 Watts, les inductances des enroulements sont de l'ordre de plusieurs dizaines de millihenry. De plus, le condensateur de filtrage des pics de commutation du hacheur est également du même ordre de grandeur que les condensateurs qui sont classiquement utilisés pour réaliser le filtrage des perturbations radiofréquences.

De plus, on constate que les liaisons électriques entre les inducteurs et les balais sont généralement effectuées au moyen d'un bornier interne au moteur. Les extrémités des enroulements du moteur peuvent donc être rendues accessibles individuellement.

Ainsi, l'idée mère de la présente invention est d'utiliser un ou plusieurs de ces enroulements en guise d'inductance d'une première cellule LC de filtrage des perturbations radiofréquences engendrées par les commutations d'un hacheur de modulation par impulsions de largeur variable d'une tension alternative d'alimentation redressée.

La première cellule de filtrage est donc, selon l'invention, constituée du condensateur de filtrage des pics de commutation du hacheur et d'un ou plusieurs enroulements du moteur.

De préférence, la première cellule ainsi constituée est celle destinée à filtrer au moins la première harmonique de la fréquence de commutation du hacheur. En effet, la cellule de filtrage de la première harmonique constitue, dans les réalisations classiques, la cellule la plus encombrante et la plus onéreuse.

Ainsi, l'invention permet, sans nuire à la commande en vitesse du moteur, de donner à deux constituants, à savoir le condensateur de filtrage des pics de commutation et au moins un des enroulements du moteur, une deuxième fonction de filtrage des perturbations radiofréquences.

On réduit ainsi l'encombrement et le coût du dispositif de commande en supprimant une des cellules de filtrage de ces perturbations radiofréquences.

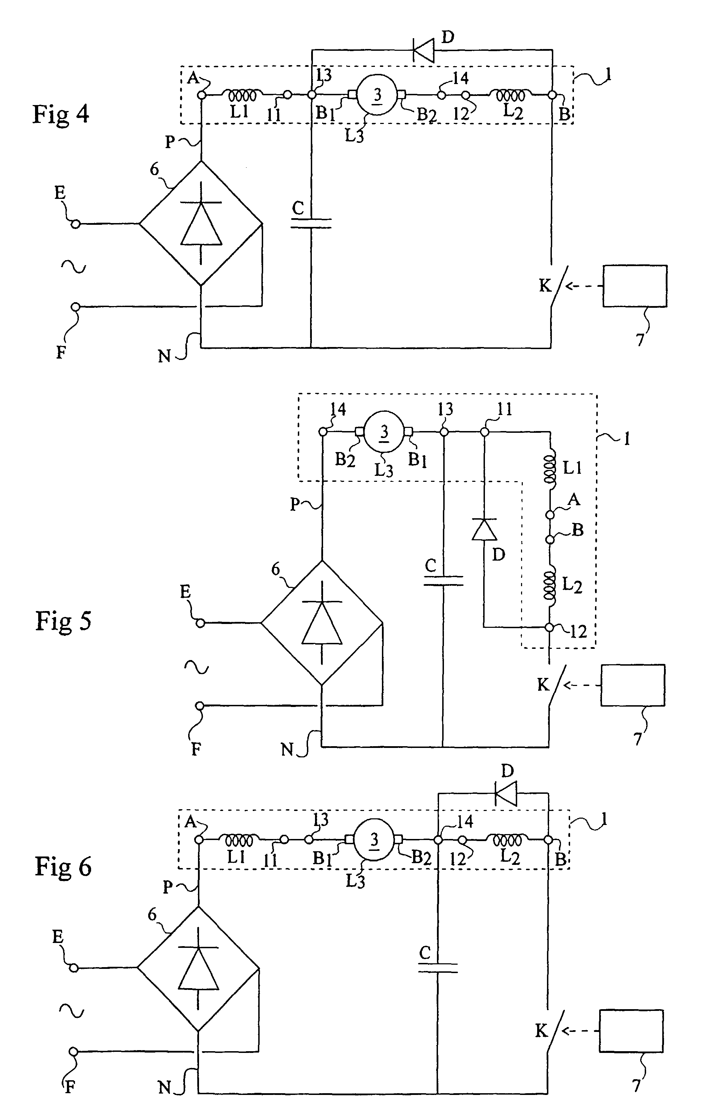

La figure 4 illustre un premier mode de réalisation d'un dispositif de commande selon l'invention où l'un L1 des enroulements du stator, ou inducteur, du moteur 1 constitue l'inductance de la première cellule de filtrage des perturbations radiofréquences.

Un dispositif de commande selon l'invention comprend, comme précédemment, un hacheur comportant un interrupteur K, par exemple un transistor MOS de puissance. Cet interrupteur K est commandé par un circuit 7 générant un train d'impulsions à une fréquence fixe (par exemple de l'ordre de 20 kHz) ou variable, la largeur des impulsions correspondant à la vitesse souhaitée pour le moteur 1. Le hacheur module une tension alternative prélevée, par exemple, sur deux bornes E et F du réseau électrique et redressée, par exemple, au moyen d'un pont de diodes 6.

Selon le premier mode de réalisation représenté à la figure 4, le pont de diodes 6 est interposé entre les bornes du réseau et les bornes A et B du moteur 1. Une première borne A est directement reliée à une première borne P, par exemple positive, de sortie du pont de diodes 6, l'interrupteur K étant placé entre une seconde borne B et une seconde borne N, par exemple négative, de sortie du pont de diodes 6.

Le condensateur C, de filtrage des pics de commutation de l'interrupteur K, n'est plus placé en parallèle sur le pont de diodes 6. Il est, désormais, placé entre la seconde borne N et un premier balai B1. En d'autres termes, le condensateur C est associé à l'inducteur L1 pour former une cellule LC de filtrage des perturbations radiofréquences.

Le fait que les liaisons électriques entre les inducteurs L1 et L2 et les balais B1 et B2 sont classiquement effectuées au moyen d'un bornier permet d'établir des liaisons entre le dispositif de commande et les balais du moteur. L'invention ne nécessite donc pas de modification conceptuelle d'un moteur classique.

Aux figures, on a schématisé le bornier du moteur en faisant apparaître les bornes qu'il comporte et les différentes liaisons entre ces bornes. Ainsi, les extrémités de l'enroulement L1 sont accessibles par deux bornes, respectivement A et 11. Les extrémités de l'enroulement L2 sont accessibles par deux bornes, respectivement B et 12. Les balais, respectivement B1 et B2, sont chacun accessibles par une borne, respectivement 13 ou 14.

Selon le premier mode de réalisation illustré par la figure 4, les liaisons entre les différentes bornes, du point de vue du moteur, correspondent aux liaisons classiques. Ainsi, le moteur 1 est alimenté par les bornes A et B qui correspondent aux extrémités libres des enroulements L1 et L2 du stator. En d'autres termes, les bornes de sortie P et N du pont de diodes 6 sont respectivement reliées directement à la borne A et, par l'intermédiaire de l'interrupteur K, à la borne B. Les bornes 11 et 13 sont reliées entre elles de même que les bornes 12 et 14.

Par contre, le condensateur C est relié, non plus à la borne A mais, à la borne 13 (ou 11). La diode de roue libre D est, selon ce premier mode de réalisation, placée entre les bornes B et 13 (ou 11).

A titre d'exemple particulier de réalisation, pour un moteur dont la puissance maximale est de l'ordre de 300 Watts, les enroulements L1, L2 et L3 présentent des valeurs de l'ordre de 60 millihenry. Un condensateur C d'une valeur d'environ 1000 picofarad permet de constituer, avec l'enroulement L1, un filtre passe-bas permettant d'éliminer la première harmonique d'une fréquence de 20 kHz de fonctionnement du hacheur.

La figure 5 illustre un deuxième mode de réalisation d'un dispositif de commande selon l'invention où l'enroulement L3 du rotor, ou induit, du moteur 1 constitue l'inductance de la première cellule de filtrage des perturbations radiofréquences.

Selon ce deuxième mode de réalisation, le moteur 1 n'est plus alimenté entre les bornes A et B mais, entre les bornes 14 et 12 qui correspondent, respectivement, au balai B2 et à une extrémité de l'enroulement L2.

Ainsi, la borne P du pont de diodes 6 est reliée à la borne 14 qui constitue une première borne d'alimentation du moteur 1. La borne N du pont de diodes 6 est reliée, par l'intermédiaire de l'interrupteur K, à la borne 12 qui constitue une seconde borne d'alimentation du moteur 1. Les enroulements L1 et L2 du stator, ou inducteurs, sont reliés en série au moyen de leur borne respective A et B. La borne 11 de l'enroulement L1 est reliée à la borne 13 du premier balai B1. Le condensateur C est ici placé entre la borne N et la borne 13 (ou 12). La diode de roue libre D est placée en parallèle sur les enroulements L1 et L2, soit entre les bornes 12 et 11 (ou 13).

A titre d'exemple particulier de réalisation, pour un moteur dont la puissance maximale est de l'ordre de 300 Watts, les enroulements L1, L2 et L3 présentent des valeurs de l'ordre de 60 millihenry. Un condensateur C d'une valeur d'environ 1000 picofarad permet de constituer, avec l'enroulement L3, un filtre passe-bas permettant d'éliminer la première harmonique d'une fréquence de 20 kHz de fonctionnement du hacheur.

La figure 6 illustre un troisième mode de réalisation d'un dispositif de commande selon l'invention où l'un L2 des enroulements du stator et l'enroulement L3 du rotor constituent l'inductance de la première cellule de filtrage des perturbations radiofréquences.

Les liaisons entre les bornes des constituants du moteur 1 sont, comme dans le cas du premier mode de réalisation, réalisées de manière classique. Le moteur est donc alimenté entre les bornes A et B qui constituent les extrémités libres des inducteurs L1 et L2 du stator. Les bornes 11 et 12 sont, respectivement, reliées aux bornes 13 et 14.

Par contre, le condensateur C est désormais placé entre la borne N du redresseur 6 et le balai B2 associé à l'enroulement L2. En d'autres termes, le condensateur C est placé entre les bornes N et 14 (ou 12). La diode de roue libre D est, selon ce troisième mode de réalisation, placée entre les bornes B et 14 (ou 12).

Ainsi, l'association en série de l'inducteur L1 et de l'induit L3 constituent, avec le condensateur C, la première cellule LC de filtrage des perturbations radiofréquences.

A titre d'exemple particulier de réalisation, pour un moteur dont la puissance maximale est de l'ordre de 300 Watts, les enroulements L1, L2 et L3 présentent des valeurs de l'ordre de 60 millihenry. Un condensateur C d'une valeur d'environ 500 picofarad permet de constituer, avec les enroulements L1 et L3, un filtre passe-bas permettant d'éliminer la première harmonique d'une fréquence de 20 kHz de fonctionnement du hacheur.

Selon un quatrième mode de réalisation non représenté, les deux enroulements L1 et L3 du stator, ou inducteurs, constituent l'inductance de la première cellule de filtrage des perturbations radiofréquences. Les connexions à réaliser au moyen du bornier se déduisent des autres modes de réalisation descrits ci-dessus.

Bien que cela n'ait pas été représenté aux figures 4 à 6, d'autres cellules de filtrage, par exemple de certaines harmoniques de la fréquence des impulsions délivrées par le circuit 7, peuvent être implantées, de manière classique, en amont ou en aval du pont de diodes 6. Mais, pour un résultat recherché donné, l'invention permet de diminuer d'un le nombre de ces cellules de filtrage.

Bien entendu, la présente invention est susceptible de diverses variantes et modifications qui apparaîtront à l'homme de l'art. En particulier, chacun des composants décrits pourra être remplacé par un ou plusieurs éléments remplissant la même fonction.

De plus, la réalisation pratique du hacheur, constitué de l'interrupteur K et du circuit 7 de génération d'impulsions de longueur variable, est à la portée de l'homme du métier en fonction de la plage de variation de vitesse souhaitée et de la puissance du moteur. De même, le choix des liaisons entre les différentes bornes du moteur 1, de la polarité de la diode de roue libre D et du condensateur C dépend du sens des enroulements et de rotation du moteur.

En outre, le dimensionnement des composants donné à titre d'exemple, en particulier des condensateurs et des inductances, pourra être modifié en fonction des fonctionnalités recherchées et notamment en fonction de la fréquence du hacheur.

## Revendications

1. Dispositif de commande d'un moteur électrique (1) à vitesse variable du type comportant un hacheur (K, 7) comprenant un interrupteur (K) de modulation par impulsions de largeur variable d'une tension alternative redressée, caractérisé en ce qu'au moins un enroulement (L1, L2, L3) dudit moteur (1) constitue, avec un condensateur (C) de filtrage des pics de commutation dudit interrupteur (K), une première cellule de filtrage de perturbations radiofréquences engendrées par les commutations de l'interrupteur (K).

2. Dispositif de commande selon la revendication 1, caractérisé en ce que ledit condensateur (C) est placé entre une borne (N) de sortie d'un redresseur (6) de ladite tension alternative et un balai (B1, B2) de contact entre une extrémité (11, 12) d'un enroulement (L1, L2) de stator (2) et un enroulement (L3) de rotor (3) du moteur (1), l'interrupteur (K) étant placé entre ladite borne (N) du redresseur (6) et une borne (B, 12) d'alimentation du moteur (1).

3. Dispositif de commande selon la revendication 2, caractérisé en ce qu'une diode de roue libre (D) est placée entre ladite borne (B, 12) d'alimentation du moteur (1) et ledit balai (B1, B2).

4. Dispositif de commande selon l'une quelconque des revendications 1 à 3, caractérisé en ce qu'une des extrémités dudit premier enroulement (L1) du stator (2) constitue une première borne (A) d'alimentation du moteur (1) reliée à une première borne (P) de sortie du redresseur (6), tandis que l'autre extrémité dudit premier enroulement (L1) est reliée à un premier balai (B1), une des extrémités d'un second enroulement (L2) du stator (2) constituant une seconde borne (B) d'alimentation du moteur (1) reliée, par l'intermédiaire dudit interrupteur (K), à une seconde borne (N) de sortie du redresseur (6), tandis que l'autre extrémité (12) dudit second enroulement (L2) est reliée à un second balai (B2).

5. Dispositif de commande selon la revendication 4, caractérisé en ce que ledit enroulement constitutif de ladite première cellule de filtrage est constitué d'un premier enroulement (L1) du stator (2) dudit moteur (1), ledit condensateur (C) étant placé entre ledit premier balai (B1) et ladite seconde borne (N) du redresseur (6).

6. Dispositif de commande selon la revendication 4, caractérisé en ce qu'un premier enroulement (L1) du stator (2), associé en série avec l'enroulement (L3) du rotor (3) dudit moteur (1), constitue, avec ledit condensateur (C), ladite première cellule de filtrage, ledit condensateur (C) étant placé entre ledit second balai (B2) et ladite seconde borne (N) du redresseur (6).

7. Dispositif de commande selon l'une quelconque des revendications 1 à 3, caractérisé en ce que ledit enroulement constitutif de ladite première cellule de filtrage est constitué d'un enroulement (L3) du rotor (3) dudit moteur (1).

8. Dispositif de commande selon la revendication 7, caractérisé en ce qu'une (11) des extrémités d'un premier enroulement (L1) du stator (2) est reliée à un premier balai (B1) tandis qu'un second balai (B2) constitue une première borne (14) d'alimentation du moteur (1) reliée à une première borne (P) de sortie du redresseur (6), l'autre extrémité (A) dudit premier enroulement (L1) étant reliée à une des extrémités (B) d'un second enroulement (L2) du stator (2) dont l'autre extrémité constitue une seconde borne (12) d'alimentation du moteur (1) reliée, par l'intermédiaire dudit interrupteur (K), à une seconde borne (N) de sortie du redresseur (6), ledit condensateur (C) étant placé entre ledit premier balai (B1) et ladite seconde borne (N) du redresseur (6).

9. Dispositif de commande selon l'une quelconque des revendications 1 à 8, caractérisé en ce que la valeur du condensateur (C) est choisie pour que la cellule de filtrage élimine au moins la première harmonique de la fréquence de modulation dudit hacheur (K, 7).

10. Dispositif de commande selon l'une quelconque des revendications 1 à 9, caractérisé en ce qu'il comporte, en outre, au moins une deuxième cellule de filtrage d'une harmonique de la fréquence de modulation dudit hacheur (K, 7), en amont dudit redresseur (6).

## Patentansprüche

1. Vorrichtung zur Steuerung eines Elektromotors (1) mit veränderlicher Drehzahl, mit einem Chopper bzw. Zerhacker (K, 7), welcher einen Unterbrecherschalter (K) zur Impulsbreitenmodulation einer gleichgerichteten Wechselspannung aufweist,
dadurch gekennzeichnet, daß wenigstens eine Wicklung (L1, L2, L3) des genannten Motors (1) zusammen mit einem Kondensator (C) zur Ausfilterung von Umschalt-Spitzen des Unterbrecherschalters (K) eine erste Filterzelle zur Ausfilterung von durch die Umschaltungen des Schalters (K) erzeugten hochfrequenten Störungen bildet.

2. Steuervorrichtung nach Anspruch 1,
dadurch gekennzeichnet, daß der genannte Kondensator (C) zwischen einem Ausgangsanschluß (N) eines Gleichrichters (6) für die genannte Wechselspannung und einer Kontakt-Schleifbürste (B1, B2) zum Kontakt zwischen einem Ende (11, 12) einer Erreger- bzw. Feldwicklung (L1, L2) des Stators (2) und einer Läufer- bzw. Ankerwicklung (L3) des Rotors (3) des Motors (1) angeordnet ist, und daß der Unterbrecherschalter (K) zwischen dem genannten Anschluß (N) des Gleichrichters (6) und einem Speise- bzw. Versorgungsanschluß (B, 12) des Motors (1) angeordnet ist.

3. Steuervorrichtung nach Anspruch 2,
dadurch gekennzeichnet, daß eine freilaufende Diode (D) zwischen dem genannten Speiseanschluß (B, 12) des Motors (1) und der genannten Kontakt-Schleifbürste (B1, B2) angeordnet ist.

4. Steuervorrichtung nach einem der Ansprüche 1 bis 3,
dadurch gekennzeichnet, daß eines der Enden der genannten ersten Wicklung (L1) des Stators (2) einen ersten Speiseanschluß (A) des Motors (1) bildet, der mit einem ersten Ausgangsanschluß (P) des Gleichrichters (6) verbunden ist, während das andere Ende der genannten ersten Wicklung (L1) mit einer ersten Kontakt-Schleifbürste (B1) verbunden ist, daß eines der Enden einer zweiten Wicklung (L2) des Stators (2) einen zweiten Speiseanschluß (B) des Motors (1) bildet, der über den genannten Unterbrecherschalter (K) mit einem zweiten Ausgangsanschluß (N) des Gleichrichters (6) verbunden ist, während das andere Ende (12) der genannten zweiten Wicklung (L2) mit einer zweiten Kontakt-Schleifbürste (B2) verbunden ist.

5. Steuervorrichtung nach Anspruch 4,
dadurch gekennzeichnet, daß die genannte, einen Bestandteil der genannten ersten Filterzelle bildende Wicklung von einer ersten Wicklung (L1) des Stators (2) des genannten Motors (1) gebildet wird und daß der genannte Kondensator (C) zwischen der genannten ersten Kontakt-Schleifbürste (B1) und dem genannten zweiten Anschluß (N) des Gleichrichters (6) angeordnet ist.

6. Steuervorrichtung nach Anspruch 4,
dadurch gekennzeichnet, daß eine erste Wicklung (L1) des Stators (2) in Reihenanordnung mit der Wicklung (L3) des Rotors (3) des genannten Motors (1) zusammen mit dem genannten Kondensator (C) die genannte erste Filterzelle bildet, wobei der genannte Kondensator (C) zwischen der genannten zweiten Kontakt-Schleifbürste (B2) und dem genannten zweiten Anschluß (N) des Gleichrichters (6) angeordnet ist.

7. Steuervorrichtung nach einem der Ansprüche 1 bis 3,
dadurch gekennzeichnet, daß die genannte, einen Bestandteil der genannten ersten Filterzelle bildende Wicklung von einer Wicklung (L3) des Rotors (3) des genannten Motors (1) gebildet wird.

8. Steuervorrichtung nach Anspruch 7,
dadurch gekennzeichnet, daß eines (11) der Enden einer ersten Wicklung (L1) des Stators (2) mit einer ersten Kontakt-Schleifbürste (B1) verbunden ist, während eine zweite Kontakt-Schleifbürste (B2) einen mit einem ersten Ausgangsanschluß (P) des Gleichrichters (6) verbundenen ersten Speiseanschluß (14) des Motors (1) bildet, daß das andere Ende (A) der genannten ersten Wicklung (L1) mit einem (B) der Enden einer zweiten Wicklung (L2) des Stators (2) verbunden ist, dessen anderes Ende einen zweiten Speiseanschluß (12) des Motors (1) bildet, der über den genannten Unterbrecherschalter (K) mit einem zweiten Ausgangsanschluß (N) des Gleichrichters (6) verbunden ist, und daß der genannte Kondensator (C) zwischen der genannten ersten Schleifkontaktbürste (B1) und dem genannten zweiten Anschluß (N) des Gleichrichters (6) angeordnet ist.

9. Steuervorrichtung nach einem der Ansprüche 1 bis 8,
dadurch gekennzeichnet, daß der Betrag des Kondensators (C) so gewählt ist, daß die Filterzelle wenigstens die erste Harmonische der Modulationsfrequenz des genannten Choppers bzw. Zerhackers (K, 7) eliminiert.

10. Steuervorrichtung nach einem der Ansprüche 1 bis 9,
dadurch gekennzeichnet, daß sie des weiteren wenigstens eine zweite Filterzelle zur Filterung einer Harmonischen der Modulationsfrequenz des genannten Choppers bzw. Zerhackers (K, 7) stromaufwärts des genannten Gleichrichters (6) aufweist.

## Claims

1. A device for controlling a variable speed motor (1) including a chopper (K, 7) including a switch (K) for modulating by variable width pulses a rectified a.c. voltage, characterized in that at least one winding (L1, L2, L3) of said motor (1) forms, with a capacitor (C) for filtering the switching peaks of said switch (K), a first cell for filtering out radio frequency perturbations generated by the switching of the switch (K).

2. The control device of claim 1, characterized in that said capacitor (C) is disposed between an output terminal (N) of a rectifier (6) of said a.c. voltage and a contact brush (B1, B2) between one end (11, 12) of a winding (L1, L2) of a stator (2) and a winding (L3) of a rotor (3) of the motor (1), the switch (K) being disposed between said terminal (N) of the rectifier (6) and a supply terminal (B, 12) of the motor (1).

3. The control device of claim 2, characterized in that a freewheel diode (D) is disposed between said supply terminal (B, 12) of the motor (1) and said brush (B1, B2).

4. The control device of any of claims 1 to 3, characterized in that one end of said first winding (L1) of the stator (2) constitutes a first supply terminal (A) of the motor (1), said first supply terminal (A) being connected to a first output terminal (P) of the rectifier (6), the other end of said first winding (L1) being connected to a first brush (B1), one end of a second winding (L2) of the stator (2) forming a second supply terminal (B) of the motor (1) said second supply terminal (B) being connected, through said switch (K), to a second output terminal (N) of said rectifier (6), and the other end (12) of said second winding (L2) being connected to a second brush (B2).

5. The control device of claim 4, characterized in that said winding constituting said first filtering cell is formed by a first winding (L1) of the stator (2) of said motor (1), said capacitor (C) being disposed between said first brush (B1) and said second terminal (N) of the rectifier (6).

6. The control device of claim 4, characterized in that a first winding (L1) of the stator (2), connected in series with the winding (L3) of the rotor (3) of said motor (1), constitutes, with said capacitor (C), said first filtering cell, said capacitor (C) being disposed between said second brush (B2) and said second terminal (N) of the rectifier (6).

7. The control device of any of claims 1 to 3, characterized in that said winding constituting said first filtering cell is formed by a winding (L3) of the rotor (3) of said motor (1).

8. The control device of claim 7, characterized in that one end (11) of a first winding (L1) of the stator (2) is connected to a first brush (B1), and wherein a second brush (B2) forms a first supply terminal (14) of the motor (1), said first terminal (14) being connected to a first output terminal (P) of the rectifier (6), the other end (A) of said first winding (L1) being connected to one end (B) of a second winding (L2) of the stator (2) whose other end constitutes a second supply terminal (12) of the motor (1), said second supply terminal (12) being connected, through said switch (K), to a second output terminal (N) of the rectifier (6), said capacitor (C) being disposed between said first brush (B1) and said second terminal (N) of the rectifier (6).

9. The control device of any of claims 1 to 8, characterized in that the capacitance of said capacitor (C) is selected so that the filtering cell eliminates at least the first harmonic of the modulation frequency of said chopper (K, 7).

10. The control device of any of claims 1 to 9, characterized in that it further includes at least a second cell for filtering an harmonic of the modulation frequency of said chopper (K, 7), upstream said rectifier (6).
